# EUROPEAN PATENT SPECIFICATION

(11) **EP 3 919 219 B1**
(45) Date of publication and mention of the grant of the patent: **10.04.2024**
(21) Application number: 20178187.9
(22) Date of filing: 04.06.2020
(51) Int. Cl.: B23K 9/00, B23K 26/21, G01K 7/22, B23K 9/173, B23K 9/167, B23K 101/38

(54) **WELDING METHOD FOR CONNECTING A FIRST CONNECTOR TO A SECOND CONNECTOR, THE USE OF THE WELDING METHOD, AND THE WELDING CONNECTION**
SCHWEISSVERFAHREN ZUM VERBINDEN EINES ERSTEN VERBINDERS MIT EINEM ZWEITEN VERBINDER, VERWENDUNG DES SCHWEISSVERFAHRENS UND SCHWEISSVERBINDUNG
PROCÉDÉ DE SOUDAGE POUR RELIER UN PREMIER CONNECTEUR À UN SECOND CONNECTEUR, UTILISATION DU PROCÉDÉ DE SOUDAGE ET CONNEXION DE SOUDAGE

(43) Date of publication of application: 08.12.2021
(73) Proprietor: TE Connectivity Germany GmbH, 64625 Bensheim (DE)
(72) Inventor: YAN, Wenting, 75015 Bretten (DE); WEINERTH, Walter, 67454 Hassloch (DE); GLASER, Karlheinz, 74223 Flein (DE)
(74) Representative: Grünecker Patent- und Rechtsanwälte PartG mbB

(56) References cited:
- EP-A1- 3 454 028
- WO-A1-2013/072961
- GB-A- 2 541 917
- US-A- 5 541 365
- US-A1- 2009 168 842
- US-A1- 2012 237 787
- US-A1- 2019 267 723
- US-A1- 2020 141 812

## Description

The invention relates to a method for connecting by welding a first connector to a second connector, and a welded connection.

The present application in particular relates to the connecting of temperature sensors, e.g. a negative temperature coefficient (NTC) thermistor, to a stranded wire. Such an application requires that the joint must be able to withstand high temperatures. In particular, the operating temperature in the application can be more than 180 °C. Industrial lead-free soldering process cannot cover those requirements while welding connections can do so.

Welding is a fabrication or sculptural process that joins materials, usually metals or thermoplastics, by using high heat to melt the parts together and allowing them to cool causing fusion. Welding is distinct from lower temperature metal-joining techniques such as brazing and soldering, which do not melt the base metal.

In order to use welding method, the weldability of the materials to be joint must be given. Weldabilitiy makes a statement about the achievement of the required quality of a welded component through welding production. The weldability of a component depends on the process. Welding process may be contactless, i.e. the energy source is not in contact with the welding partners as for example by an arc welding process or an energy beam welding process. Alternatively, the energy source can be in contact with the welding partners, for example by the electric resistance welding.

Further, weldability is the ability of a component made of a specific material to be welded under given manufacturing and design conditions in such a way that it can fulfil its intended tasks over its service life. In particular, the weldability of a component depends on the joinability of the materials to be welded. In more detail, joinability refers to the material properties and is the material suitability for the application of certain welding processes. The technological properties, chemical behavior and mechanical quality values of the material to be welded are taken into account here.

Further, this application refers to a welded connection of a first connector, e.g. a stranded wire, to a second connector, e.g. a dumet wire which is commonly used by thermistors. In more detail, a connector, also referred to as electrical connector, is an electromechanical device used to join electrical conductors and create an electrical circuit.

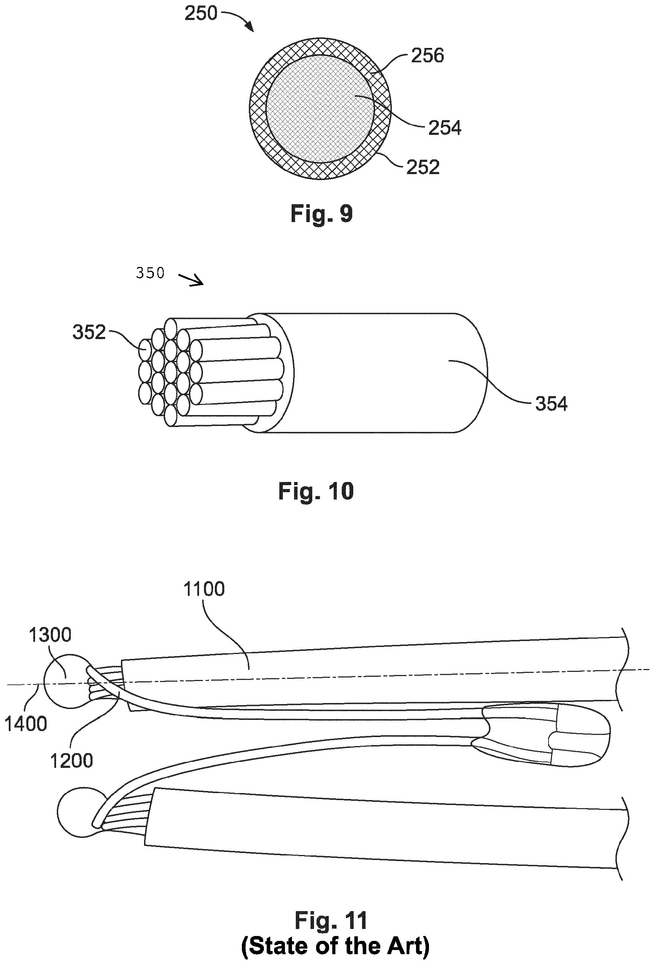

It is known, as shown in Fig. 11 to align a stranded wire 1100 and a connecting part of the thermistor 1200 radially. In more detail, a weld 1300 forms a center of the welded connection. The stranded wire 1100 and the connecting part of the thermistor 1200 pointing along a radius from the weld 1300. Generally, the weld 1300 has approximately an ellipsoidal shape. According to the known configuration, a first half of the outer surface of the ellipsoidal shape is smooth and a second half of the outer surface opposing the first half comprises the stranded wire 1100 and the connecting part of the thermistor 1200.

Advantageously, the stranded wire 1100 and the connecting part of thermistor 1200 connected by the weld 1300, are arranged axially. An axial orientation is an arrangement of the wires along the longitudinal axis, which is indicated by the dashed line 1400, of the connectors, i.e. an orientation along the axis of rotation of the connector bodies. In view of the state of the art, such a connection is achieved by bending, for example, the connecting part of thermistor 1200.

Such a bending process, however, has disadvantages such as increased space requirements, material stresses in the bended wire and/or the weld, and additional process step.

Especially when using contactless welding technologies such as Tungsten Inert Gas Welding (TIG) or Laser-Welding, the welding technologies are not ready to arrange the welding partners, i.e. the wires to be connected, in an axial orientation before welding, and thus, avoiding the bending step. In more detail, welding two wires, wherein the ends of the two wires are facing opposite directions before welding, causes a weld between the two wires having a gap in the middle of the weld. Further, the small distances between the welding partners, i.e. the connectors, suffer by the heat applied.

US 2020/141812 A1 (disclosing all the features and steps of the preamble of claims 1 and 12 respectively) relates to a temperature sensor provided with: an element that comprises a resistor which has a resistance value that changes with temperature thereof, and a lead wire; a signal wire that is bonded to the lead wire by welding; and a cover that covers the element and a welded part between the lead wire and the signal wire, where the lead wire comprises a material in which oxide particles are dispersed in platinum or platinum alloy; and the welded part has a welded part interface region along an interface with the lead wire or the signal wire, and a welded part main region inside thereof, and a volume ratio of the oxide particles occupying the welded part interface region is larger than a volume ratio of the oxide particles occupying the welded part main region.

WO 2013/072961 A1 relates to a temperature sensor that can become more elongated while suppressing an increase in cost; and an apparatus provided with the temperature sensor.

US 2009/168842 A1 relates to a temperature sensitive element having a temperature sensitive body and an element electrode wire; a sheath member having an external cylinder, the sheath member encompassing a sheath core wire to be bonded to the element electrode wire in the external cylinder; an enclosing member having a bottom-closed cylindrical shape extending in an axial direction, at least the temperature sensitive element and a bond portion of the element electrode wire and the sheath core wire being accommodated in an internal space of the bottom-closed cylindrical shape, and a holding member that is filled in the internal space, wherein an air gap is provided at least between an outer surface of the temperature sensitive body and the holding member so as to permit displacement of the temperature sensitive body in a direction intersecting the axial direction of the enclosing member.

US 2019/267723 A1 relates to a sensor element that includes a sensor body that includes a thermistor; paired lead wires drawn out from the element body; and stranded wires that are each obtained by twisting a plurality of core wires and are joined to the respective paired lead wires in a welding region. The welding region includes a main joining region provided in a predetermined region in an axis direction, and sub joining regions adjacent to the main joining region, and joining strength of each of the lead wires and the corresponding stranded wire is higher in the main joining region than in the sub-joining region.

EP 3 454 028 A1 relates to a temperature detection device that is provided with: a thermistor element including a thermosensitive body, which senses heat of a coil element and an electrical wire, which is electrically connected to the thermosensitive body; and a holder by which the thermistor element is fitted to the coil element 9.

GB 2 541 917 A relates to a method suitable for welding aluminium wires comprising, placing a plurality of aluminium wires, proximal a connector, heating said wires and said connector forming at least one weld pool and allowing said weld pool to solidify such that the wires are welded to the connector.

The object of the invention is to provide a solution for a welding connection that is optimized in using the installation space. A further object is to provide a particularly robust connection, in particular that can used at operation temperatures higher than 180°C. A further object is to provide connection that can be fabricated at low costs. Additionally, an object of the present solution is to provide a visual appearance of the connection that enables an easy visual inspection. A further object is to provide a connection for connection partners that have different material compositions and geometrical dimensions.

This object of the present invention is solved by a method of connecting by welding a first connector to a second connector as defined in claim 1, and by a welded connection as defined in claim 12. Advantageous embodiments are solved by the dependent claims.

According to a first aspect of the present invention (see claim 1), a method of connecting by welding a first connector to a second connector comprises the steps of providing a first connector having a first end and providing a second connector having a second end, the second end of the second connector for being welded to the first end of the first connector. In more detail, a first end and a second is the one end of a connector that is used for joining one connector to another connector.

Further, according to the present invention, the method comprises the step of overlapping the first end and the second end. In other words, the lateral surfaces of the ends are connected by a lap joint, i.e. the lateral surfaces are abutting, and the base surfaces of the ends of the two connectors are facing opposite directions. Thus, the connectors can be aligned before welding.

Further, according to the present invention, the method comprises the step of contactless heating a central section of the first end. By heating the central section, an end section of the first end is melted.

In more detail, the heating is performed contactless, i.e. the heat is generated by power source that in not in contact with first connector or the second connector. Such a contactless welding enables a fast process which is easily automated, and thus, making the process highly productive.

In more detail, the heating of the central section of the end section allows an asymmetric heat dissipation with regard to opposing directions of the first connector. In more detail, on one side of the first connector the heat will be dissipated to the first connector. On the opposing side of the first connector, however, the heat is confined in the end section. Consequently, the end section is heated up until the end section is melting. In other words, during heating the end section transforms from a solid to liquid having an ellipsoidal shape.

The molten mass confines additionally the second end of the second connector. Thus, by overlapping the first end and the second end in an axially orientated direction before heating, a particularly space saving arrangement is realized.

Further, according to the present invention, the method comprises the step of cooling the first end and the second end so that the molten mass hardens. The weld, which is hardened by the phase transition from liquid to solid, connects then the first connector and the second connector. According to the present invention, the first connector and the second connector extend in opposite directions from the weld. Such a connection enables an axial orientation of the welding partners without bending one partner after cooling down the weld.

Thus, a welded connection using the above describes process makes a bending step of one connector in order to achieve axial orientation after welding unnecessary. Additionally, such a welding connection is a particularly strong and the operating temperature in an application using such a connection can be more than 180 °C.

Advantageously, the first end has a length of at least one diameter of the first connector, preferably a length of two times the diameter. Such a configuration allows providing sufficient melting material without having the need of an additional filler material.

According to an even more advantageous embodiment, the first end has length of at least three diameters of the first connector, which preferably is a stranded wire. Such a configuration enables a weld having a diameter larger than the diameter of the first connector. According to an even more advantageous embodiment, the first end has length of at least three diameter and less that four diameter of the first connector, which preferably is a stranded wire. Such a configuration enables a weld embedding the first connector and the second connector.

Advantageously, the end section of the first end has a length less than one diameter of the first connector. Such a configuration allows efficiently employing the heat energy to melt the end section.

Advantageously, the central section of first end is arranged in the middle of the axial extension direction of the first connector. Such a configuration allows providing sufficient melting material and at the same time efficiently employing the heat energy to melt the end section

Advantageously, the method further comprises the step of covering, during the heating, at least partly the end section of the first end with a heat shield. A heat shield, preferably made of a ceramic material, is arranged between the energy source, which provides contactless the heat, and at least a part of the end section. Such a configuration allows better confining the heat in the end section and thus improves the melting process.

Additionally, the heat shield influences adhesive forces. In more detail, adhesive effects influence the shape of the melted material. In more detail, in surface science, the term adhesion refers to dispersive adhesion. In a typical solid-liquid-gas system (such as a drop of liquid, i.e. the melted material on a solid, i.e. the first connector and the second connector surrounded by air or an welding gas) the contact angle is used to evaluate adhesiveness indirectly. Generally, cases where the contact angle is low are considered of higher adhesion per unit area. This approach assumes that the lower contact angle corresponds to a higher surface energy.

In other words, by embedding the second connector, tipping the melt of the first connector around the second connector, the joint becomes insensitive to peel forces. The quality of the joint can be seen from the contact angle. The contact angle is also referred to as wetting angle.

Furthermore, the heat shield influences the tensile strength by protecting the second connector against notching.

The contact angle of the three-phase system is a function not only of dispersive adhesion (interaction between the molecules in the liquid and the molecules in the solid) but also the presence of the heat shield. In other words, the dissimilar materials and surfaces of the melted material and the heat shield increases the wetting of the weld to the connectors. Wetting is the ability of a liquid, i.e. the molten material, to maintain contact with a solid surface, i.e. the first and second connector, resulting from intermolecular interactions when the two are brought together. Thus, by cooling down the molten material a particularly strong connection is realized.

Even more advantageously, the second end of the second connector and the heat shield are arranged on opposing sides of the lateral surface of the first end. Lateral surface of the first connector is the area of all the sides of the object, excluding the area of its base and top. Such a configuration optimally employs the adhesive effects.

Advantageously, the heat is contactless transferred via process such as an arc welding process, for example a gas tungsten arc welding process, or an energy beam welding process, for example a laser beam or an electrode beam. TIG is useful for welding thin materials, this method is characterized by a stable arc and high quality welds, but it requires significant operator skill and can only be accomplished at relatively low speeds. In particular, a follow rate of the inert gas, e.g. argon, allows to be adapted so that the surface appearance of the weld can be improved. Energy beam processes are extremely fast, and are easily automated, making them highly productive. The primary disadvantages are their very high equipment costs and a susceptibility to thermal cracking.

Advantageously, the first connector has a higher thermal conductivity than the second wire. In such a configuration the end section is heated up even more quickly because heat is conducted through the second conductor more poorly. According to the present invention, the first connector has a lower melting temperature than the second wire. In such a configuration the material of the first connector melts first, thereby influencing the cohesion (interaction between the liquid molecules of the melt themselves) and causing the meld to form drops of material of the first connector, which thus confer the second connector.

Advantageously, the method connects the connecting terminal of a thermistor or a thermocouple to a connecting terminal of a connector. Such temperature sensitive work pieces have to be operated at high operation temperatures that exclude connections such as soldering.

Advantageously, the method connects as the first connector a stranded wire, a lead frame, or a massive wire. Such connectors are usually used to electrically contact work pieces such as sensors.

Advantageously, the method connects as the second connector a dumet wire.

Dumet is a portmanteau of "dual" and "metal," because it is a heterogeneous alloy, usually fabricated in the form of a wire with an alloy core and a copper cladding. These alloys possess the properties of electrical conductivity, minimal oxidation and formation of porous surfaces at working temperatures of glass and thermal coefficients of expansion which match glass closely. These requirements allow the alloys to be used in glass seals, such that the seal does not crack, fracture or leak with changes in temperature.

A further aspect of the present invention is a welded connection as defined in claim 12, connecting a first connector to a second connector, wherein a weld connects the first connector and the second connector, wherein the first connector and the second connector extend in opposite directions from the weld. The inventors surprisingly found out that a welded connection, having such axially arranged connectors, is possible by using the above described method. In particular, such a connection can be realized using the contactless heating.

Advantageously, the first connector of the welded connection has a larger diameter than the second wire. According to the present application a diameter is the diameter of a circle or the diagonal of a polygon, in particular the diameter of a rectangular.

Even more advantageously, the first connector has a diameter of greater equal 0.25 mm and less equal 2.0 mm, even more advantageously greater equal 0.6 mm and less equal 0.85 mm. Additionally or alternatively the second connector has a diameter of greater equal 0.1 mm and less equal 0.5 mm even more advantageously of greater equal 0.2 mm and less equal 0.3 mm. Such a configuration enables to connect the connecting terminal of a thermistor or a thermocouple to a connecting terminal of a connector. Further, such dimension allow a strength of the weld connection that is larger than the strength value of the second connector, i.e. the second connector would crack first. The inventors found out that this holds particularly true if the second wire is a dumet wire.

Advantageously, a face of the weld is an ellipsoid and wherein a symmetry axis of the weld is formed by a common longitudinal axis of the first connector and the second connector. By the ellipsoidal shape the adhesiveness can be quantifies and thus the strength of the connection can be determined. Even more advantageously, the face is a prolate spheroid and the common longitudinal axis is the symmetry axis of the weld. Such a shape indicates a particularly strong connection. Even more advantageously, the equatorial radius of the weld has a diameter of 1.6 times the diameter of the first connector. Such a shape ensures that a second connector with a thinner radius, such as a dumet wire, can be completely confined by the weld.

The invention will now be described in greater detail and in an exemplary manner using advantageous embodiments and with reference to the drawings.

In the figures,
- **FIG. 1**: is a schematic three-dimensional view of a thermistor connected to a stranded wire by a welded connection according to an embodiment;
- **FIG. 2**: is a picture showing details of the welded connection shown in Fig. 1;
- **FIG. 3**: is a schematic planar view of Fig. 2;
- **FIG. 4**: is a schematic view showing of a first step of a welding method according to an embodiment;
- **FIG. 5**: is a schematic view showing of a second step of the welding method;
- **FIG. 6**: is a schematic view showing of a third step of the welding method;
- **FIG. 7**: is a schematic view showing of a fourth step of the welding method;
- **FIG. 8**: is a schematic view showing of a fifth step of the welding method;
- **FIG. 9**: is a cross-sectional schematic view showing of a dumet wire;
- **FIG. 10**: is a cross-sectional schematic view showing of a stranded wire; and
- **FIG. 11**: is a picture of welded connection showing the state of the art.

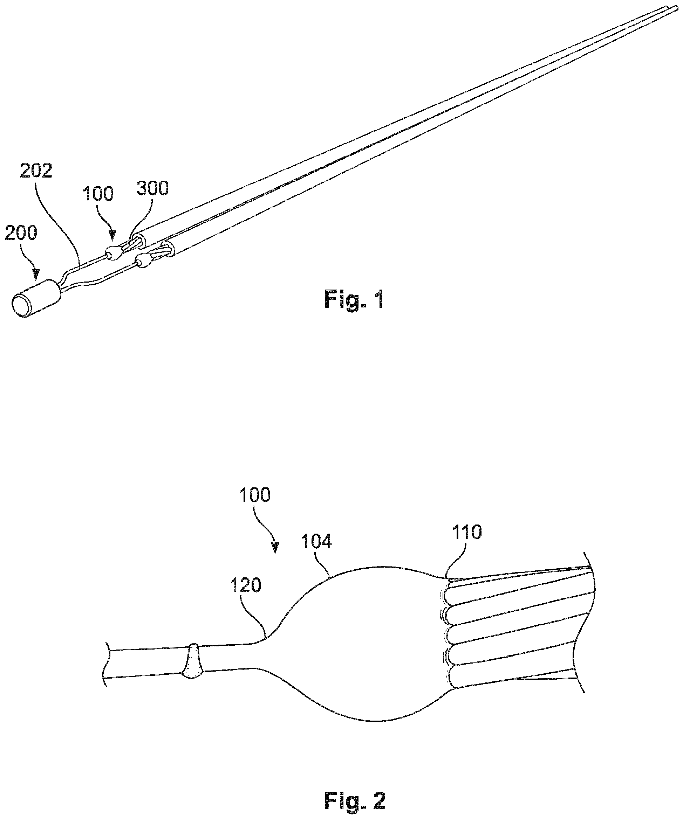

The present invention will now be explained in more detail with reference to the Figures. Referring to Fig. 1, a schematic three-dimensional view of a thermistor 200 connected to a stranded wire 300 by a welded connection 100 according to an embodiment is shown. In more detail, the thermistor 200 comprises a connecting part 202 that is connected to the stranded wire 300.

The stranded wire 300 and the connecting part 202 are arranged linearly. In more detail, the stranded prior 300 and the connecting part 202 have a common longitudinal axis. The weld 100 surrounds an end of the connecting part 202 and an end of the stranded prior 300.

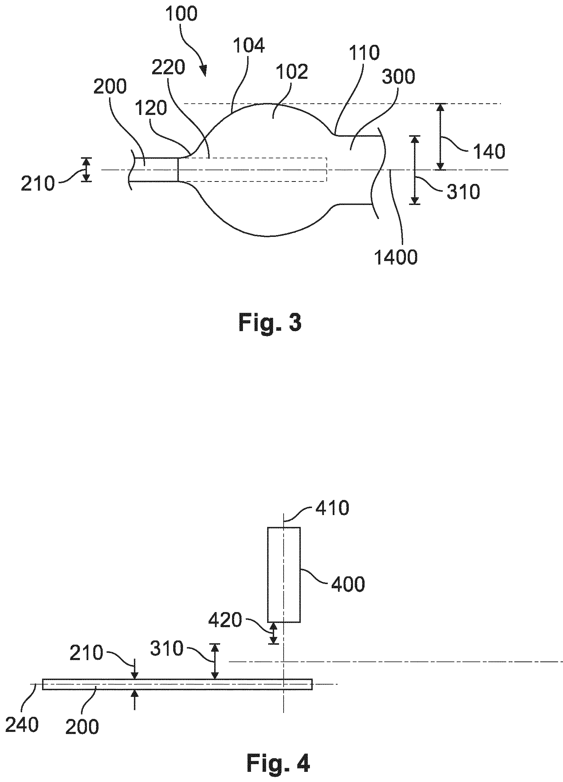

The welded connection 100 is shown in greater detail in Fig. 2, which shows a picture of a welded connection 100 according to an embodiment. Fig. 3 is a schematic of the picture shown in Fig. 2 used to explain the main characteristics of the welded connection 100 in greater detail.

The welded connection 100 connects the first connector 300 to the second connector 200. A weld 102 connects the first connector 300 and the second connector 200. The weld 102 is formed by melting an end section of the first connector 300. The weld 102 surrounds a second end 220, indicated by a broken line, of the second connector 200. The first connector 300 and the second connector 200 extend in opposite directions from the weld.

The first connector 300 has a first diameter 310 and the second wire has a second diameter 210. As shown in Fig. 3, the first diameter 310 is larger than the second diameter 210. According to the example shown in Fig. 2 the first connector 300 has a diameter 310 of greater equal 0.65 mm and less equal 0.85 mm. According to the example shown in Fig. 2, the second connector 200 has a diameter 210 of greater equal 0.15 mm and less equal 0.25 mm.

Further, a face 104 of the weld 102 forms has convex shape, approximately forming an ellipsoid. In more detail, a symmetry axis of the weld is formed by a common longitudinal axis of the first connector 300 and the second connector 200, which indicated by dashed line 400.

As further shown in Fig. 2, the face is only approximately an ellipsoid. The ellipsoidal shape indicates that the molten material has formed a drop, which indicates a strong cohesion of the weld in the liquid phase, and thus, results in a strong connection of the weld 102 and the second end 220. Notably, the shape of the weld 102 deviates from the theoretical ellipsoidal shape by the protrusions caused by the second end 220. However, these protrusions do not influence the overall convex shaped face 104 of the weld. In particular, a convex shape is an indication of cohesion.

Further, the weld 102 has a first toe 110, also referred to as first meniscus 110, and a second toe 120, also referred to as second meniscus 120, wherein the shape of the both toes 110, 120 deviate from the ellipsoidal shape of the face 104. In more detail, the toes 110, 120 are concave shaped regions, which are also referred to as meniscus. Concave meniscus occurs when the particles of the liquid are more strongly attracted to the solid, i.e. the second connector and the stranded wire, (adhesion) than to each other (cohesion), causing the molten material to climb the walls of the connectors.

The formation of menisci is used in surface science to measure contact angles and surface tension. In a contact angle measurement, the shape of the menisci is measured e.g. optically with a digital camera. Menisci are a manifestation of capillary action, by which surface adhesion pulls a liquid up to form a concave meniscus.

As shown in Figs. 2 and 3, the contact angles of the toes 110, 120 are less than 90° indicating that the liquid molecules of the molten material are strongly attracted to the solid molecules of the connectors 200, 300, and thus, the molten material spread out on the solid surface. Notably, the contact angles of the toes 110, 120 are extremely sensitive to contamination; values reproducible to better than a few degrees are generally only obtained under laboratory conditions with purified liquids and very clean solid surfaces.

In other words, as shown in Fig. 2, the weld has face 104 that has a convex shape and a first and second toe 110, 120 that have a concave shape.

As further shown in Fig. 3, the face 104 is approximately a prolate spheroid and the common longitudinal axis 1400 is the symmetry axis of the weld 102. In more detail, an equatorial radius 140 of the weld has a diameter of 1.5 times the first diameter 310 of the first connector 300.

Further, with reference to Figs. 4 to 8 a welding method for connecting a first connector 300 to a second connector 200 is described.

In particular, Fig. 4 shows a schematic view of a first step of the welding method according to an embodiment. Firstly, the second connector 200 is provided. The second connector 200 has a second diameter 210. The second connector 200 defines a second longitudinal axis indicated by dash-dotted line 240 and is aligned in respect to an electrode 400.

In more detail, the electrode 400 is aligned along a main axis indicated by dash-dotted line 410. The energy is dissipated along the main axis 410 from the electrode 400. The electrode 400 is spaced apart from the second connector 200. In particular, the distance between the second connector 200 and the electrode is composed of a first distance 310, which is equal to first diameter 310 of the first connector not shown in Fig. 4, and a predetermined distance 420 of 0.5 mm.

In particular, the main axis 410 of the electrode is perpendicular to the second longitudinal axis 240.

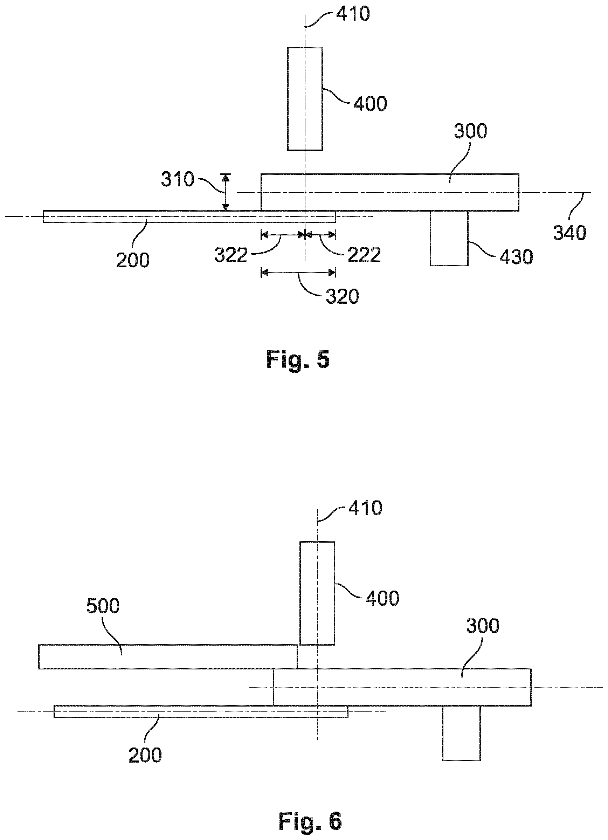

A second step of the welding method is described in Fig. 5, wherein the first connector 300 is provided. The first connector 300 defines a first longitudinal axis indicated by dash-dotted line 340 and is aligned in respect to the electrode 400. In particular, the first connector 300 is aligned parallel to the second connector 200. Notably, the first and second step of the method may be interchanged.

Further, the first connector 300 has a first end and the second connector 200 has a second end, the second end for being welded to the first end. In particular, the first end has a length of at least one diameter 310 of the first connector, preferably, as shown in Fig. 5, the first end has a length 320 of two times the diameter 310. Further, the first end of the first connector 300 overlaps a second end of the second connector 200.

Further, a central section of first end is aligned with respect to the main axis 410 of the electrode 400. Thus, a length 322 of the end section of the first end has a length less than the length 320 of the first end. In particular, the length 322 of the end second is less than one diameter 310 of the first connector. Additionally, a second end section of the second connector 200 overlaps with the first end of the first connector. In particular, a length 222 of the second end section is less than or equal to one diameter 310 of the first connector.

Further, as shown in Fig. 5, the central section of the first end is arranged in the middle of the axial extension direction of the first connector. In other words, an overlapping region of the first end and the second end is mirror symmetrical with respect to the main axis 410 of the electrode 400.

Further, a cathode 430 is connected to the first connector.

Advantageously, as shown in Fig 6, a third step of the welding method, a heat shield 500 is provided, the heat shield covering, during the heating, at least partly the end section of the first end.

In particular, the second end of the second connector 200 and the heat shield 500 are arranged on opposing sides of the lateral surface of the first end of the first connector 300. In other words, the second end of the second connector 200, the first end of the first connector 300, and the heat shield 500 are arranged on the main axis 410 of the electrode 400 with decreasing distance to the electrode 400, respectively.

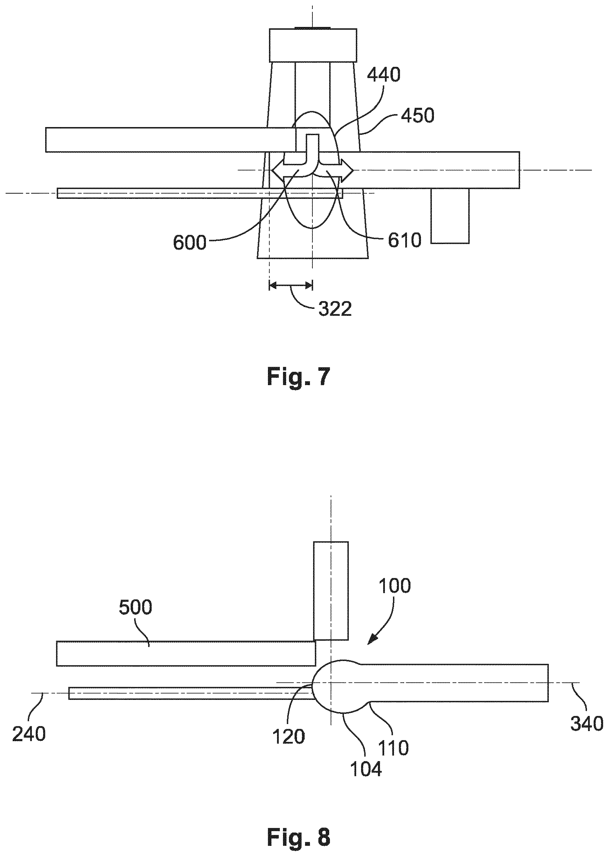

A schematic view a fourth step of the welding method is described in Fig. 7, showing the contactless heating of the central section of the first end. In particular, the central section is heated using an arc 440. Additionally, an inert gas 450 is protecting the welding area.

Further, Fig. 7 describes the heat flux in the first connector 300. In particular, the heat is conducted by the first connector 300. A first part 600 of the heat is conducted to the end section. As the end section is short, the heat is confined and the end section is heated up until the end section is melting. A second part 610 of the heat is conducted to a main section of the first connector 300, the main section is the part of the first connector opposing the end section.

In more detail, the length 322 of the end section is shorter, preferably negligible, compared to the length of the main section of the first connector 300. Thus, the second part 610 of the heat is not sufficient to melt main section of the first connector 300. In other word, the overall heat capacity of the second conductor 300 is large compared to the heat capacity of the end section. Advantageously, the first connector 300 has a higher thermal conductivity than the second wire. Therefore only little heat can be dissipated via the second connector 200 and the end section heats up faster than the main section. According to the present invention, the first connector has a lower melting temperature than the second wire. Thus, the end section of the first connector melts first. A schematic view a fifth step of the welding method is described in Fig. 8, showing the welded connection 100 after melting the end section. This welded connection 100 is the same as described above with regard to Figs. 2 and 3 and a detailed description thereof is omitted. In addition to Figs. 2 and 3 the side view of Fig. 8 shows that the first longitudinal axis 340 and the second longitudinal axis 240 are not collinear. This, however, does not influence the convex shape of the face 104 and the concave shape of the first and second toe 110, 120.

Additionally, Fig. 8 shows the heat shield 500 and the power source 400. In particular, the close arrangement of the heat shield 500 supports the forming of the convex shape of the face 104 and the concave shape of the second toe 120. Thus, a particular strong connection can be realized. Further, the heat shield 500 improves the melting process by efficiently confining the heat. Further, Fig. 9 shows a cross-sectional schematic view of a dumet wire 250 used for forming the second connector. The dumet-wire 250 is a copper clad wire 252 with a core 254 of nickel-iron alloy. A component body 256 is encapsulated with glass. The core has a low coefficient of thermal expansion, allowing for a wire with a coefficient of radial thermal expansion which is slightly lower than the linear coefficient of thermal expansion of the glass, so that the glass-to-metal interface is under a low compression stress.

Further, Fig. 10 shows a cross-sectional schematic view of a stranded wire 350. The stranded wire 250 is composed of a number of small wires 352 bundled or wrapped together to form a larger conductor. The small wires 352 are cladded by an insulation layer 354, e.g. a high temperature fluoropolymer. Alternatively, a lead frame or a massive wire may be used instead as first connector.

### REFERENCE NUMERALS

| **Reference Numeral** | **Description** |
|---|---|
| 100 | welded connection |
| 102 | weld |
| 104 | face |
| 110 | first toe (first meniscus) |
| 120 | second toe (second meniscus) |
| 140 | equatorial radius |
| 200 | second connector, thermistor |
| 210 | second diameter |
| 220 | second end |
| 222 | length of second end section |
| 240 | second longitudinal axis |
| 250 | dumet wire |
| 252 | copper clad |
| 254 | core |
| 256 | component body glass encapsulated |
| 300 | first connector |
| 310 | first diameter |
| 320 | length of first end |
| 322 | length of first end section |
| 340 | first longitudinal axis |
| 350 | stranded wire |
| 352 | small wires (single strands) |
| 354 | insulation layer |
| 400 | electrode |
| 410 | main axis of electrode |
| 420 | predetermined distance |
| 430 | cathode |
| 440 | arc |
| 450 | inert gas |
| 500 | heat shield |
| 600 | first part of the heat |
| 610 | second part of the heat |
| 1100 | stranded wire |
| 1200 | connecting part of the thermistor |
| 1300 | weld |
| 1400 | longitudinal axis |

## Claims

1. Method of connecting by welding a first connector (300) to a second connector (200), wherein the method comprises the steps:
Providing the first connector (300) having a first end;
Providing the second connector (200) having a second end (220), the second end for being welded to the first end;
Overlapping the first end and the second end;
Contactless heating of a central section of the first end, thereby melting an end section of the first end, the end section of the first end facing the second connector, and being **characterised in that**:
the material of the first connector has a lower melting temperature than the material of the second wire so that the melted material forms a drop of the material of the first connector, the drop of the melted material surrounding the second end; and
Cooling the first end and the second end so that a weld in form of a drop surrounding the second end connects the first connector and the second connector, wherein the first connector and the second connector extend in opposite directions from the weld.

2. Method according to claim 1, wherein the first end has a length (320) of at least one diameter (310) of the first connector, preferably a length of two times the diameter.

3. Method according to claim 1 or claim 2, wherein the end section of the first end has a length (322) less than one diameter of the first connector.

4. Method according to one of claims 1 to 3, wherein the central section of first end is arranged in the middle of the axial extension direction of the first connector.

5. Method according to one of claims 1 to 4, wherein the method further comprises the step of covering, during the heating, at least partly the end section of the first end with a heat shield.

6. Method according to claim 5, wherein the second end of the second connector and the heat shield are arranged on opposing sides of the lateral surface of the first end.

7. Method according to one of claims 1 to 6, wherein the central section is heated using an arc welding process, preferably a gas tungsten arc welding process, or an energy beam welding process, preferably a laser beam.

8. Method according to one of claims 1 to 7, wherein the first connector has a higher thermal conductivity than the second wire.

9. Method according to claim 1, wherein the second connector comprises a connecting terminal of a thermistor or a thermocouple, the connecting terminal is connected to a connecting terminal of the first connector.

10. Method according to claim 1 or claim 9, wherein the first connector is a stranded wire, a lead frame, or a massive wire.

11. Method according to one of claims 1 or 10, wherein the second connector is a dumet wire.

12. Welded connection (100) comprising a first connector (300), a second connector (200), and a weld connecting the first connector (300) to the second connector (200),
wherein the first connector and the second connector extend in opposite directions from the weld;
and being **characterised in that**:
the material of the first connector has a lower melting temperature than the material of the second wire so that the material of the first connector when heated by contactless heating is melting, the melted material forming a drop of the material of the first connector, the drop of the melted material surrounding the second connector; and
wherein a face (104) of the weld (102) in form of the drop surrounding the second end follows a convex shape and toes (110, 120) of the weld follow a concave shape, and wherein a symmetry axis of the weld is formed by a common longitudinal axis (400) of the first connector and the second connector.

13. Welded connection (100), according to claim 12, wherein the first connector (300) has a larger diameter than the second connector (200), preferably wherein the first connector has a first diameter (310) of greater equal 0.25 mm and less equal 2.0 mm and/or the second connector (210) a diameter of greater equal 0.1 mm and less equal 0.5 mm.

14. Welded connection according to claim 12 or claim 13,
wherein the face is a prolate spheroid and the common longitudinal axis is the symmetry axis of the weld, preferably wherein an equatorial radius (140) of the weld has a diameter of 1.6 times the first diameter (310).

## Patentansprüche

1. Verfahren zum Verbinden eines ersten Verbinders (300) mit einem zweiten Verbinder (200) durch Schweißen, wobei
das Verfahren die folgenden Schritte umfasst:
Bereitstellen des ersten Verbinders (300) mit einem ersten Ende;
Bereitstellen des zweiten Verbinders (200) mit einem zweiten Ende (220), wobei das zweite Ende mit dem ersten Ende verschweißt werden soll;
Überlappen des ersten und des zweiten Endes;
Berührungsloses Erwärmen eines mittleren Abschnitts des ersten Endes, wodurch ein Endabschnitt des ersten Endes geschmolzen wird, wobei der Endabschnitt des ersten Endes dem zweiten Verbinder gegenüberliegt,
und **dadurch gekennzeichnet, dass**:
das Material des ersten Verbinders eine niedrigere Schmelztemperatur hat als das Material des zweiten Drahtes, so dass das geschmolzene Material einen Tropfen des Materials des ersten Verbinders bildet, wobei der Tropfen des geschmolzenen Materials das zweite Ende umgibt; und
Abkühlen des ersten Endes und des zweiten Endes, so dass eine Schweißnaht in Form eines Tropfens, der das zweite Ende umgibt, den ersten Verbinder und den zweiten Verbinder verbindet, wobei sich der erste Verbinder und der zweite Verbinder in entgegengesetzten Richtungen von der Schweißnaht aus erstrecken.

2. Verfahren nach Anspruch 1, wobei das erste Ende eine Länge (320) von mindestens einem Durchmesser (310) des ersten Verbinders hat, vorzugsweise eine Länge vom Zweifachen des Durchmessers.

3. Verfahren nach Anspruch 1 oder Anspruch 2, wobei der Endabschnitt des ersten Endes eine Länge (322) aufweist, die kleiner ist als ein Durchmesser des ersten Verbinders.

4. Verfahren nach einem der Ansprüche 1 bis 3, wobei der mittlere Abschnitt des ersten Endes in der Mitte der axialen Erstreckungsrichtung des ersten Verbinders angeordnet ist.

5. Verfahren nach einem der Ansprüche 1 bis 4, wobei das Verfahren ferner den folgenden Schritt umfasst:
Abdecken, während des Erhitzens, des Endabschnitts des ersten Endes zumindest teilweise mit einem Hitzeschild.

6. Verfahren nach Anspruch 5, wobei das zweite Ende des zweiten Verbinders und der Hitzeschild auf gegenüberliegenden Seiten der Seitenfläche des ersten Endes angeordnet sind.

7. Verfahren nach einem der Ansprüche 1 bis 6, wobei der mittlere Abschnitt unter Verwendung eines Lichtbogenschweißverfahrens, vorzugsweise eines Wolfram-Lichtbogenschweißverfahrens, oder eines Energiestrahlschweißverfahrens, vorzugsweise eines Laserstrahls, erwärmt wird.

8. Verfahren nach einem der Ansprüche 1 bis 7, wobei der erste Verbinder eine höhere Wärmeleitfähigkeit aufweist als der zweite Draht.

9. Verfahren nach Anspruch 1, wobei der zweite Verbinder eine Anschlussklemme eines Thermistors oder eines Thermoelementes umfasst, wobei die Anschlussklemme mit einer Anschlussklemme des ersten Verbinders verbunden ist.

10. Verfahren nach Anspruch 1 oder Anspruch 9, wobei der erste Verbinder eine Litze, ein Leiterrahmen oder ein massiver Draht ist.

11. Verfahren nach einem der Ansprüche 1 oder 10, wobei der zweite Verbinder ein Dumet-Draht ist.

12. Schweißverbindung (100), die einen ersten Verbinder (300) umfasst, einen zweiten Verbinder (200) und eine Schweißnaht, die den ersten Verbinder (300) mit dem zweiten Verbinder (200) verbindet,
wobei sich der erste Verbinder und der zweite Verbinder in entgegengesetzten Richtungen von der Schweißnaht erstrecken;
und **dadurch gekennzeichnet, dass**:
das Material des ersten Verbinders eine niedrigere Schmelztemperatur hat als das Material des zweiten Drahtes, so dass das Material des ersten Verbinders bei Erwärmung durch berührungsloses Erwärmen schmilzt, wobei das geschmolzene Material einen Tropfen des Materials des ersten Verbinders bildet und der Tropfen des geschmolzenen Materials den zweiten Verbinder umgibt; und
wobei eine Fläche (104) der Schweißnaht (102) in Form des Tropfens, der das zweite Ende umgibt, einer konvexen Form folgt und Spitzen (110, 120) der Schweißnaht einer konkaven Form folgen, und wobei eine Symmetrieachse der Schweißnaht durch eine gemeinsame Längsachse (400) des ersten Verbinders und des zweiten Verbinders gebildet wird.

13. Schweißverbindung (100) nach Anspruch 12, wobei der erste Verbinder (300) einen größeren Durchmesser als der zweite Verbinder (200) hat, vorzugsweise wobei der erste Verbinder einen ersten Durchmesser (310) von größer gleich 0,25 mm und kleiner gleich 2,0 mm und/oder der zweite Verbinder (210) einen Durchmesser von größer gleich 0,1 mm und kleiner gleich 0,5 mm hat.

14. Schweißverbindung nach Anspruch 12 oder Anspruch 13,
wobei die Fläche ein gestrecktes Sphäroid ist und die gemeinsame Längsachse die Symmetrieachse der Schweißnaht ist, vorzugsweise wobei ein äquatorialer Radius (140) der Schweißnaht einen Durchmesser von 1,6-mal dem ersten Durchmesser (310) hat.

## Revendications

1. Procédé de connexion par soudage d'un premier connecteur (300) à un deuxième connecteur (200), dans lequel
le procédé comprend les étapes :
fourniture du premier connecteur (300) présentant une première extrémité ;
fourniture du deuxième connecteur (200) présentant une deuxième extrémité (220), la deuxième extrémité étant destinée à être soudée à la première extrémité ;
chevauchement de la première extrémité et de la deuxième extrémité ;
chauffage sans contact d'une section centrale de la première extrémité, fondant ainsi une section d'extrémité de la première extrémité, la section d'extrémité de la première extrémité étant orientée vers le deuxième connecteur,
et étant **caractérisée en ce que** :
le matériau du premier connecteur présente une température de fusion inférieure au matériau du deuxième câble de sorte que le matériau fondu forme une goutte du matériau du premier connecteur, la goutte du matériau fondu entourant la deuxième extrémité ; et
refroidissement de la première extrémité et de la deuxième extrémité de sorte qu'une soudure en forme d'une goutte entourant la deuxième extrémité connecte le premier connecteur et le deuxième connecteur, dans lequel le premier connecteur et le deuxième connecteur s'étendent dans des directions opposées depuis la soudure.

2. Procédé selon la revendication 1, dans lequel la première extrémité présente une longueur (320) d'au moins un diamètre (310) du premier connecteur, préférablement une longueur de deux fois le diamètre.

3. Procédé selon la revendication 1 ou la revendication 2, dans lequel la section d'extrémité de la première extrémité présente une longueur (322) de moins d'un diamètre du premier connecteur.

4. Procédé selon l'une des revendications 1 à 3, dans lequel la section centrale de la première extrémité est disposée dans le milieu de la direction d'extension axiale du premier connecteur.

5. Procédé selon l'une des revendications 1 à 4, dans lequel le procédé comprend en outre l'étape de couverture, au cours du chauffage, au moins partielle de la section d'extrémité de la première extrémité avec un écran thermique.

6. Procédé selon la revendication 5, dans lequel la deuxième extrémité du deuxième connecteur et l'écran thermique sont disposés sur des côtés opposés de la surface latérale de la première extrémité.

7. Procédé selon l'une des revendications 1 à 6, dans lequel la section centrale est chauffée au moyen d'un processus de soudure à l'arc, préférablement un processus de soudage à l'arc au tungstène, ou un processus de soudage par faisceau d'énergie, préférablement un faisceau laser.

8. Procédé selon l'une des revendications 1 à 7, dans lequel le premier connecteur présente une conductivité thermique supérieure au deuxième câble.

9. Procédé selon la revendication 1, dans lequel le deuxième connecteur comprend une borne de connexion d'un thermistor ou d'un thermocouple, la borne de connexion est connectée à une borne de connexion du premier connecteur.

10. Procédé selon la revendication 1 ou la revendication 9, dans lequel le premier connecteur est un fil tressé, un cadre de connecteur ou un câble massif.

11. Le procédé selon l'une des revendications 1 à 10, dans lequel le deuxième connecteur est un câble Dumet.

12. Connexion soudée (100) comprenant un premier connecteur (300), un deuxième connecteur (200) et une soudure connectant le premier connecteur (300) au deuxième connecteur (200),
dans laquelle le premier connecteur et le deuxième connecteur s'étendent dans des directions opposées depuis la soudure ;
et étant **caractérisée en ce que** :
le matériau du premier connecteur présente une température de fusion inférieure au matériau du deuxième câble de sorte que le matériau du premier conducteur, lorsque chauffé par chauffage sans contact, fonde, le matériau fondu formant une goutte du matériau du premier connecteur, la goutte du matériau fondu entourant le deuxième connecteur ; et
dans laquelle une face (104) de la soudure (102) en forme de la goutte entourant la deuxième extrémité suit une forme convexe, et des extrémités (110, 120) de la soudure suivent une forme concave et dans laquelle un axe de symétrie de la soudure est formé par un axe longitudinal commun (400) du premier connecteur et du deuxième connecteur.

13. Connexion soudée (100), selon la revendication 12, dans laquelle le premier connecteur (300) présente un diamètre supérieur au deuxième connecteur (200), préférablement dans laquelle le premier connecteur présente un premier diamètre (310) supérieur ou égal à 0,25 mm et inférieur ou égal à 2,0 mm et/ou le deuxième connecteur (210) présente un diamètre supérieur ou égal à 0,1 mm et inférieur ou égal à 0,5 mm.

14. Connexion soudée selon la revendication 12 ou la revendication 13,
dans laquelle la face est un sphéroïde oblong et l'axe longitudinal commun est l'axe de symétrie de la soudure, préférablement dans laquelle un rayon équatorial (140) de la soudure présente un diamètre de 1,6 fois le premier diamètre (310).
